# EUROPEAN PATENT SPECIFICATION

(11) **EP 2 187 625 B1**
(45) Date of publication and mention of the grant of the patent: **17.08.2011**
(21) Application number: 09175457.2
(22) Date of filing: 10.11.2009
(51) Int. Cl.: H04N 5/232

(54) **Autofocus system**
Autofokussystem
Système autofocus

(30) Priority: 12.11.2008 JP 2008289825
(43) Date of publication of application: 19.05.2010
(73) Proprietor: Fujinon Corporation, Kita-ku Saitama (JP)
(72) Inventor: Takano, Yoshijiro, Saitama (JP); Matsuura, Yuuji, Saitama (JP)
(74) Representative: Klunker . Schmitt-Nilson . Hirsch

(56) References cited:
- EP-A- 1 737 216
- JP-A- 2008 270 896

## Description

### BACKGROUND OF THE INVENTION

### 1. Technical Field

The Invention relates to an autofocus system according to the preamble of claim 1. Such system can, in a camera system having a face authentication function, perform a focusing operation while face-authentication and tracking a specific person within an image-taking range of a camera. An autofocus system according to the preamble of claim 1 is known from JP 2008 270896 A.

### 2. Description of the Related Art

In an autofocus (AF) system that automatically focuses a camera, it is necessary to provide the camera with an instruction as to what the camera should focus on. At this time, in general cameras, a position on which the camera is focused is fixed to the center of the image-taking range; for example, the camera is designed so as to focus on a person or the like being in the center of the image-taking range.

However, in the case where a moving subject is shot, it is inconvenient if the position on which the camera is focused is fixed as mentioned above. Accordingly, for the purpose of focusing on a subject in the case where a television camera or the like shoots a scene, such as sports, in which the subject is moving vigorously, JP 2006-267221 A (corresponding to US 2006/0140612 A) describes an autofocus area (AF area) automatic tacking system that brings an AF area to follow the movement of the subject.

Moreover, JP 2004-320286 A (corresponding to US 2004/0207743 A) describes a digital camera that detects an image representative of a person's face from a taken image, and is automatically focused on the face as the subject or automatically changes a zooming magnification so that an area representative of the detected face in the image is enlarged.

### SUMMARY OF THE INVENTION

However, in a system in which the camera is focused on a specific person whose face has been authenticated, authentication data is required to perform face authentication. For example, when the camera is focused on many persons in succession in recording of a TV program, it is necessary to register in advance data used to authenticate plural persons' faces.

Even if the authentication data is stored in a memory of a television camera main body, when a different device is used, it is necessary to register the authentication data again into a memory of a main body of the different device, which requires time and labor.

In view of the above circumstances, the invention has been made and provides an autofocus system that enables respective devices to perform face authentication using authentication data without the authentication data being registered in memories of main bodies of all the devices even when images are taken using plural camera systems.
[1] According to an aspect of the invention, an autofocus system includes an imaging device, an autofocus unit, a face authentication information acquiring unit, and a face authentication unit. The imaging device takes a subject image formed by an optical system. The autofocus unit performs focus adjustment of the optical system so that a subject within a certain AF area is in focus in the image taken by the imaging device. The face authentication information acquiring unit acquires information required to face-authenticate a plurality of subjects, from an external memory which is separate from the autofocus system and which stores the information required to face-authenticate the plurality of subjects which are targets to be focused on during taking of the image. The face authentication unit face-authenticates the subject in the taken image to determine as to whether or not the subject in the taken image is the same person as any of the subjects, which are targets to be focused on during the taking. If the face authentication unit determines that the subject in the taken image is the same person as any of the subjects, which are targets to be focused on during the taking, the autofocus unit performs the focus adjustment for the subject in the taken image.
   With this configuration, even when images are taken by plural camera systems, respective devices can perform face authentication using authentication data even without the authentication data being registered in memories of main bodies of all the devices, and focus adjustment can be performed.
[2] In the autofocus system of [1], by moving the AF area, which is a target range for which the focus adjustment is performed by the autofocus unit, in accordance with a movement of the subject in the taken image, which is determined by the face authentication to be the same person as any of the subjects, which are targets to be focused on during the taking, the subject may be automatically tracked in the taken image.
   With the configuration, the respective devices can perform the face authentication using the authentication data even without the authentication data being registered in the plural devices, and the automatic tracking can be easily performed.
[3] In the autofocus system of any one of [1] and [2], the external memory may include a data card.
   With this configuration, the respective devices can easily use the authentication data even without the authentication data being registered in the memories of the main bodies of all the respective devices.

As described above, with any of the above configurations, even if images are taken by plural camera systems, the respective devices can perform face authentication using the authentication data even without the authentication data being registered in the memories of the main bodies of all the devices, and can easily perform automatic tracking.

### BRIEF DESCRIPTION OF THE DRAWINGS

Fig. 1 is a block diagram showing the overall configuration of a video camera system to which an autofocus system according to a first embodiment of the invention is applied; and

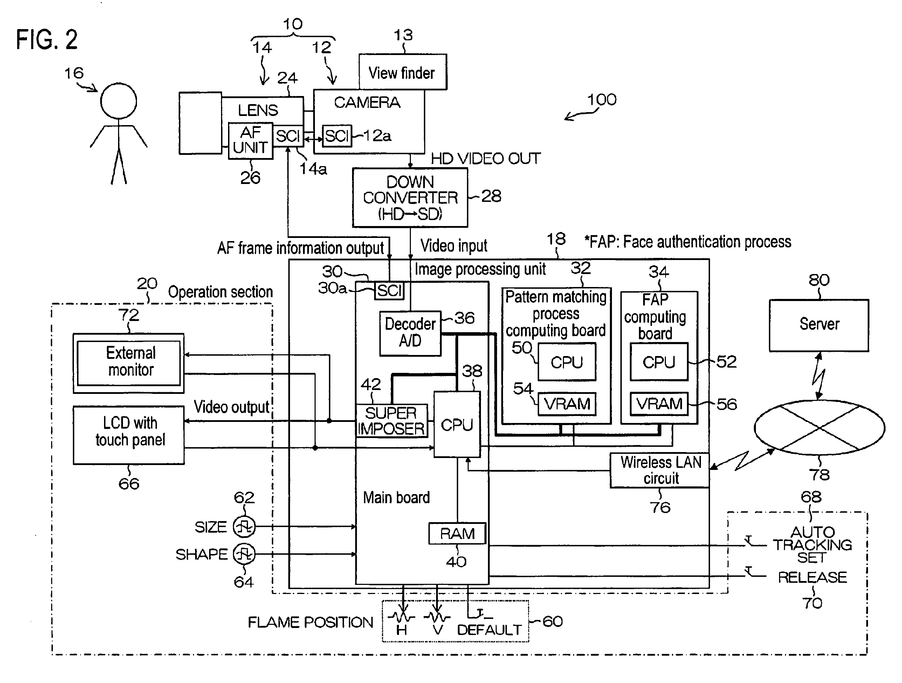

Fig. 2 is a block diagram showing the overall configuration of the video camera system to which the autofocus system according to a second embodiment of the invention is applied.

### DETAILED DESCRIPTION OF EMBODIMENTS OF THE INVENTION

Hereinafter, an autofocus system according to exemplary embodiments of the invention will be described in detail with reference to the accompanying drawings.

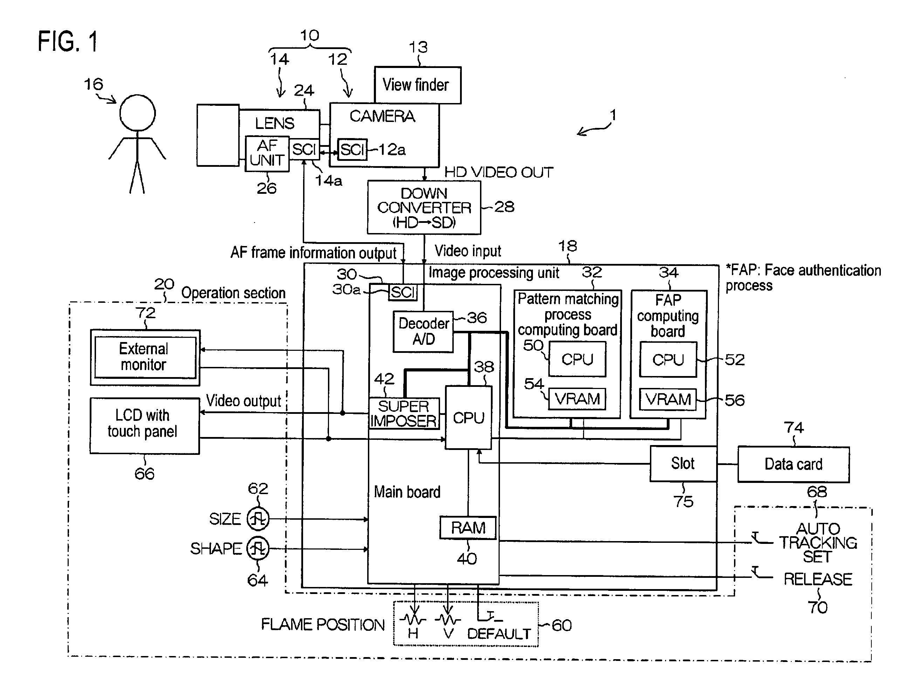

Fig. 1 is a block diagram showing the overall configuration of a video camera system to which the autofocus system according to a first embodiment of the invention is applied. This video camera system is, for example, an imaging system which is used to take images by a broadcasting television camera.

As shown in Fig. 1, the video camera system 1 of the first embodiment includes a television camera 10, an image processing unit 18 and the like.

The television camera 10 includes a camera body 12 which is a high-definition (HD) camera compliant with an high-definition television (HDTV) format and a lens device 14 having a taking lens (optical system) attached to a lens mount of the camera body 12. Although not shown, the camera body 12 is supported so as to be movable in a panning direction and in an upward and downward tilting direction on a pan head.

The camera body 12 includes an imaging device (for example, a CCD) and a necessary signal processing circuit. An image formed by the taking lens of the lens device 14 is photoelectrically converted by the imaging device, undergoes necessary signal processing by the signal processing circuit, and is then output to an outside from an video signal output terminal or the like of the camera body 12 as a video signal of the HDTV format (HDTV signal).

Moreover, the camera body 12 has a viewfinder 13. An image which is currently being taken by the television camera 10 and the like are displayed in the viewfinder 13. Moreover, various pieces of information are displayed in the viewfinder 13. For example, an AF frame which is a target range for focusing in automatic focusing described later is displayed so as to be superimposed on the taken image.

The lens device 14 includes the taking lens (zoom lens) 24 attached to the lens mount of the camera body 12. An image of a subject 16 is formed on an imaging surface of the imaging device of the camera body 12 by the taking lens 24. Although not shown, the taking lens 24 has, as its constituent members, movable members for adjusting image taking conditions such as a focusing lens group, a zoom lens group and an aperture diaphragm. The movable members are electrically driven by a motor (servo mechanism). For example, the focusing lens group and the zoom lens group are moved in an optical axis direction. Focus (subject distance) adjustment is performed by having the focusing lens group move. Also, focal length (zooming magnification) adjustment is performed by having the zoom lens group move.

In systems associated with automatic focusing (AF), other movable members may ones that can be driven only manually so long as at least the focusing lens group can be electrically driven. When a certain movable member is electrically driven according to an operation by an operator, the operation of the movable member is controlled based on a control signal output from non-illustrated operation unit (an operation unit of a controller connected to the lens device 14, etc.) according to the operation by the operator. Detailed description thereof is omitted.

The lens device 14 also includes an AF unit 26 and a non-illustrated lens CPU. The lens CPU performs centralized control of the entire lens device 14. The AF unit 26 includes a processor that acquires information required to perform focus control (automatic focus adjustment) by AF, and although not shown, is formed of an AF processor and an AF imaging circuit. The AF imaging circuit is disposed in the lens device 14 to acquire video signals for AF processing, and includes an imaging device (referred to as AF imaging device) such as an imaging device CCD and a processing circuit that outputs an output signal of the AF imaging device as a video signal in a certain format. The video signal output from the AF imaging circuit is a brightness signal.

Subject light branching off from the subject light being incident on the imaging device of the camera body 12 by a half mirror or the like disposed on an optical path of the taking lens 24 forms an image on the imaging surface of the AF imaging device,. An image-taking range and a subject distance (a distance to a subject that is in focus) for an imaging area of the AF imaging device are configured to coincide with an image-taking range and a subject distance for an imaging area of the imaging device of the camera body 12. A subject image taken by the AF imaging device coincides with a subject image taken by the imaging device of the camera body 12. It is not necessary that these image-taking ranges completely coincide with each other. For example, the image-taking range of the AF imaging device may be a larger range containing the image-taking range of the imaging device of the camera body 12.

The AF processor acquires video signals from the AF imaging circuit, and calculates a focal point evaluation value representative of a value of contrast of the subject image based on the video signals. For example, after extracting signals of high-frequency components of the video signals acquired from the AF imaging device by a high-pass filter, the AF processor integrates signals, in a range corresponding to the AF area for which AF is to be performed, among the high-frequency component signals for each screen (for each frame). The integration value obtained for each screen in this way represents the value of the contrast of the subject image, and is supplied to the lens CPU as the focal point evaluation value.

The lens CPU acquires the information of the AF frame (AF frame information) representative of a range (outline) of the AF area from the image processing unit 18 as described later and designates, to the AF processor as the AF area, a range within the AF frame specified by the AF frame information. Then, the lens CPU acquires, from the AF processor, the focal point evaluation value, which is obtained from the image (video signals) in the AF area.

In this manner, the focal point evaluation value is acquired from the AF processor every time one screen of video signals are acquired from the AF imaging circuit (every time the focal point evaluation value is obtained by the AF processor), and the focusing lens group is controlled so that the acquired focal point evaluation value becomes maximum (local maximum), that is, so that the contrast of the subject image within the AF frame becomes highest. Examples of the focusing lens group control method based on the focal point evaluation value include a hill-climbing method. With this method, the focusing lens group is moved in a direction that increases the focal point evaluation value, and when a point where the focal point evaluation value starts to decrease is detected, the focusing lens group is set in this position. Thereby, the camera is automatically focused on the subject within the AF area.

While the above-described AF processor acquires the video signals from the AF imaging device mounted on the lens device to calculate the focal point evaluation value, it may acquire video signals of the image taken by the imaging device of the camera body 12 from the camera body 12. An AF mechanism for automatically focusing the camera on the subject within the AF frame may be any one.

For connection between the camera body 12 and the lens device 14 and for connection between the lens device 14 and the image processing unit 18 described later, serial communication connectors provided on the respective devices are connected directly or through a cable or the like. Thereby, the camera body 12 and the lens device 14 transmit and receive various pieces of information by serial communication through serial communication interfaces (SCIs) 12a and 14a provided on the camera body 12 and the lens device 14, respectively. Moreover, the lens device 14 and the image processing unit 18 transmit and receive various pieces of information by serial communication between serial communication interfaces 14a and 30a which are provided on the lens device 14 and the image processing unit 18, respectively.

A video output connector of the camera body 12 and a video input connector of the image processing unit 18 are connected by a cable through a down converter 28. Thereby, the HDTV signal output from the video output connector of the camera body 12 is input to the image processing unit 18 after down-converted into an NTSC (National Television System Committee) video signal (SDTV signal) by the down converter 28.

Although described later in detail, the image processing unit 18 face-authenticates a subject person in the taken subject image. If the person is recognized as a subject (focus target) that is set so as to be automatically tracked while being automatically brought in focus, the image processing unit 18 performs autofocus control for the lens device 14 through the AF unit 26.

To perform the face authentication and determine as to whether or not the subject, which is currently take, is a target to be automatically tracked while being automatically brought in focus, the image is not necessarily a high-definition image of an HDTV signal, but may be an image of an NTSC signal (SDTV signal). For this reason, the HDTV signal output from the camera body 12 is converted into an SDTV signal by the down converter 28 as described above.

The image processing unit 18 is a device that specifies the range (position, size, and shape (aspect ratio)) of the AF frame when the AF unit 26 of the lens device 14 performs focus control by AF as described above. The AF frame information specifying the range of the AF frame in the image (taken image screen) taken by the television camera 10 is supplied from the image processing unit 18 to the lens device 14 by the above-described serial communication. The AF unit 26 sets the range of the AF frame based on the AF frame information acquired from the image processing unit 18, and performs the AF processing as described above.

The image processing unit 18 mainly includes a main board 30, a pattern matching process computing board 32 and a face authentication process computing board 34. The main board 30, the pattern matching process computing board 32 and the face authentication process computing board 34 are provided with CPUs 38, 50 and 52, respectively, and an individual arithmetic processing is performed by each board. The CPUs 38, 50 and 52 are connected by buses and control lines so that data can be exchanged among them and operations can be synchronized with each other.

The processing in the image processing unit 18 is centralizedly performed on the main board 30. The SCI 30a, a decoder (A/D converter) 36, a superimposer 42, a RAM 40 and the like are provided on the main board 30 as well as the CPU 38 performing arithmetic processing.

The SCI 30a is an interface circuit for performing serial communication with the SCI 14a of the lens device 14 as described above, and transmits the AF frame information and the like to the lens device 14.

The decoder 36 is a circuit for converting the video signal (SDTV signal) of the image, which is taken by the television camera 10 and input from the down converter 28 to the image processing unit 18, into data that is digital processible in the image processing unit 18, and performs A/D conversion to convert the analog SDTV signal into a video signal of digital data.

The RAM 40 is a memory temporarily storing data used for the arithmetic processing by the CPU 38.

The pattern matching process computing board 32 and the face authentication process computing board 34 are arithmetic processing boards for individually performing pattern matching and face detection/authentication, and are provided with VRAMs 54 and 56 temporarily storing image data as well as the CPUs 50 and 52 performing arithmetic processing, respectively.

An operation section 20 is integrally provided on the image processing unit 18. Alternatively, a part of the operation section 20 or all of operation members are provided in a device which is separate from the image processing unit 18 and are connected by a cable or the like.

Although not described in detail, the operation section 20 includes a position operation member 60, a size operation member 62, a shape operation member 64, a tracking start switch 68 and a tracking stop switch 70. The position operation member 60 (for example, a joystick or a trackball) moves the position of the AF frame upward, downward, rightward and leftward by a user's manual operation. The size operation member 62 (for example, a knob) changes the size of the AF frame by a manual operation. The shape operation member 64 (for example, a knob) changes the shape of the AF frame by a manual operation. The tracking start switch 68 provides an instruction to start automatic tracking. The tracking stop switch 70 provides an instruction to stop automatic tracking. Setting conditions of the operation members 60, 62, 64, 68 and 70 are read out by the CPU 38 of the main board 30 in the image processing unit 18.

An LCD 66 with a touch panel is configured so that settings of a mode associated with the automatic tracking of the AF frame and the like can be input by a touch operation. An image which is displayed on the LCD 66 by the CPU 38 of the image processing unit 18 can be switched appropriately in accordance with contents of the settings.

The image, which is displayed on the LCD 66 with the touch panel, is provided through the superimposer 42 of the main board 30. In the superimposer 42, the video signal of the image, which is taken by the television camera 10 and is supplied from the decoder 36, can be superimposed on the image signal generated by the CPU 38. Thereby, similarly to the viewfinder 13 set in the camera body 12, an image where the image being taken by the television camera 10 and the image of the currently set AF frame are superimposed on each other can be displayed on the LCD 66 with the touch panel. By a touch operation on this screen, a user can perform operations similar to those performed with the operation members 60, 62, 64, 68 and 70.

The operation section 20 includes an external monitor 72 as well as the LCD 66 with the touch panel, and the same image as that displayed on the LCD 66 with the touch panel is displayed on the external monitor 72. The external monitor 72 is configured so that a person other than a cameraman, for example, a focusman can input instructions appropriately by the touch panel function while viewing the external monitor 72.

This embodiment is configured so that, when face authentication and automatic tracking of a subject are performed, each device can use the authentication data for the face authentication at the time of taking images even without pre-registration of the authentication data in the camera system.

In the first embodiment, the authentication data is stored in a data card 74 as an external memory in advance, the data card 74 is inserted into a slot 75 of the image processing unit 18 at the time of taking images, and the necessary authentication data is read out from the data card 74 to the CPU 38 through the slot 75 for use.

Examples of the data card 74, which is the external memory, include an SD (secure digital) card and a USB memory.

As described above, by storing the authentication data in an external memory in advance, the authentication data can be used anytime by setting the external memory in the camera system even without pre-registration of the authentication data in the camera system itself.

The data registered in the external memory (data card 74) includes data for face authentication. For example, for one person, plural pieces of data such as differences in a way a face gets sunlight, different face images such as a front-side face image, a right-side face image and a left-side face image, a distance between the eyes, a distances between the eyes and the nose, and a ratios therebetween are registered so as to constitute one file.

When authentication data is stored, an operator takes images with the data card 74 inserted in the slot 75, and authentication data created by the image processing unit 18 is registered into the data card 74 by the CPU 38.

When the authentication data stored in the data card 74 is used, the operator inserts the data card 74 into the slot 75, and specifies a target to be tracked while being brought in focus, from among the pieces of authentication data pre-registered and stored in the data card 74 through the LCD 66 with the touch panel of the operation section 20.

At this time, the operator may sequentially specify a next target so that the target for automatic focusing is switched according to a certain order, or may specify a target for automatic focusing arbitrarily.

The CPU 38 of the main board 30 selects the authentication data of the target specified as being to be tracked while being brought in focus during taking of an image, from among the large number of pieces of authentication data stored in the data card 74, or reads the authentication data so that the target to be tracked (target for automatic focusing) is switched according to a predetermined order in which subjects are set to the target to be tracked.

The CPU 38 sends the read authentication data to the pattern matching process computing board 32 and the face authentication process computing board 34. Moreover, the CPU 38 fetches one frame of image data of the taken images from the decoder 36 into the pattern matching process computing board 32 and the face authentication process computing board 34.

Then, the CPU 50 of the pattern matching process computing board 32 executes pattern matching to detect an image coinciding with the authentication data from the taken image and detect a position of the detected image.

The CPU 38 determines as to whether or not the authentication data, that is, the face image to be tracked is moved within the taken image based on a result of the pattern matching processing. When the CPU 38 determines that the face image to be tracked is moved, the CPU 52 of the face authentication process computing board 34 performs face authentication to detect and authenticate the face image from the taken image. The CPU 52 of the face authentication process computing board 34 performs the face-authenticates by checking the image data of the image, which is currently being taken, against the authentication data sent from the CPU 38 of the main board 30. This face authentication is performed according to a known face authentication technology.

If the face image is detected in the taken image and authenticated, the size of the AF frame is changed to one suitable for the detected face image.

If the face image is not detected in the taken image or authenticated, the AF frame is changed to the position of the face image represented by the authentication data detected in the above-described pattern matching processing without the size of the AF frame being changed. The AF frame may be changed to the position of the face image represented by the authentication data detected in the pattern matching even in the case where the face image is detected and authenticated.

In this manner, automatic tracking can be easily performed using the authentication data, which is pre-registered and pre-stored in the data card 74 serving as an external memory without pre-registration of the authentication data of the face image, which is to be tracked while being brought in focus, in the camera system itself.

In the data card setting data and the like of a cameraman may be stored together with the data for face authentication.

While the autofocus system of the invention has been described in detail, the invention is not limited to the above-described examples. It is to be noted that various improvements and modifications may be made without departing from the scope of the claims.

## Claims

1. An autofocus system comprising:
an imaging device (12, 14) that takes a subject image formed by an optical system;
an autofocus unit (26) that performs focus adjustment of the optical system so that a subject within a certain AF area is in focus in the image taken by the imaging device;
a face authentication information acquiring unit (38, 75) that acquires information required to face-authenticate a plurality of subjects, from a memory, and which stores the information required to face-authenticate the plurality of subjects which are targets to be focused on during taking of the image; and
a face authentication unit (34) that face-authenticates the subject in the taken image based on the acquired information to determine as to whether or not the subject in the taken image is the same person as any of the subjects, which are targets to be focused on during the taking, wherein
if the face authentication unit (34) determines that the subject in the taken image is the same person as any of the subjects, which are targets to be focused on during the taking, the autofocus unit performs the focus adjustment for the subject in the taken image
**characterized in that** said memory is a memory (74) insertable into and separable from the autofocus system.

2. The autofocus system according to claim 1, wherein by moving the AF area, which is a target range for which the focus adjustment is performed by the autofocus unit, in accordance with a movement of the subject in the taken image, which is determined by the face authentication to be the same person as any of the subjects, which are targets to be focused on during the taking, the subject is automatically tracked in the taken image.

3. The autofocus system according to any one of claims 1 to 2, wherein the external memory includes a data card.

## Patentansprüche

1. Autofokussystem, umfassend:
eine Abbildungseinrichtung (12, 14), die ein durch ein optisches System gebildetes Personenbild aufnimmt;
eine Autofokuseinheit (26), die eine Scharfeinstellung des optischen Systems in der Weise durchführt, dass eine Person innerhalb einer gewissen AF-Fläche innerhalb des von der Abbildungseinrichtung aufgenommenen Bilds scharfeingestellt ist;
eine Gesichtsauthentifizierungsinformations-Erfassungseinheit (38, 75), die Information, welche erforderlich ist zur Gesichtsauthentifizierung einer Mehrzahl von Personen, aus einem Speicher erfasst, der die Information speichert, die erforderlich ist zur Gesichtsauthentifizierung der mehreren Personen, bei denen es sich um Fokussierziele bei der Aufnahme des Bilds handelt; und
eine Gesichtsauthentifiziereinheit (34), welche eine Gesichtsauthentifizierung der Person innerhalb des aufgenommenen Bilds vornimmt, um zu bestimmen, ob die Person in dem aufgenommenen Bild dieselbe Person ist wie eine der Personen, die Fokussierziele während der Aufnahme sind, wobei
dann, wenn die Gesichtsauthentifiziereinheit (34) bestimmt, dass die Person in dem aufgenommen Bild dieselbe Person wie eine der Personen, bei denen es sich um Fokussierziele während der Aufnahme handelt, die Autofokuseinheit die Scharfeinstellung für die Person in dem aufgenommenen Bild ausführt,
**dadurch gekennzeichnet, dass** der Speicher ein externer Speicher (74) ist, der in das Autofokussystem einsetzbar und von diesem trennbar ist.

2. Autofokussystem nach Anspruch 1, bei dem durch Bewegen der AF-Fläche, bei der es sich um einen Zielbereich handelt, für den die Scharfeinstellung von der Autofokuseinheit vorgenommen wird, entsprechend einer Bewegung der Person in dem aufgenommenen Bild, die durch die Gesichtsauthentifizierung als dieselbe Person wie eine der Personen bestimmt wurde, bei denen es sich um Fokussierziele während der Aufnahme handelt, die Person automatisch innerhalb des aufgenommenen Bilds verfolgt wird.

3. Autofokussystem nach einem der Ansprüche 1 bis 2, bei dem der externe Speicher eine Datenkarte enthält.

## Revendications

1. Système de mise au point automatique comprenant :
un dispositif d'imagerie (12 ; 14) qui prend une image de sujet formée par un système optique ;
une unité de mise au point automatique (26) qui effectue un réglage de la mise au point du système optique de sorte qu'un sujet à l'intérieur d'une certaine zone AF soit au point dans l'image prise par le dispositif d'imagerie ;
une unité d'acquisition d'informations d'authentification de visage (38 ; 75) qui acquiert des informations requises pour authentifier le visage d'une pluralité de sujets, à partir d'une mémoire (74), **caractérisée en ce que** ladite mémoire est une mémoire pouvant être insérée dans et séparée du système de mise au point automatique et qui stocke les informations requises pour authentifier le visage de la pluralité de sujets qui sont des cibles devant faire l'objet d'une mise au point pendant la prise de l'image ; et
une unité d'authentification de visage (34) qui authentifie le visage du sujet dans l'image prise sur la base des informations acquises afin de déterminer si le sujet dans l'image prise est ou non la même personne que l'un quelconque des sujets, qui sont des cibles devant faire l'objet d'une mise au point pendant la prise, où
si l'unité d'authentification de visage (34) détermine que le sujet dans l'image prise est la même personne que l'un quelconque des sujets, qui sont des cibles devant faire l'objet d'une mise au point pendant la prise, l'unité de mise au point automatique effectue le réglage de la mise au point pour le sujet dans l'image prise.

2. Système de mise au point automatique selon la revendication 1, dans lequel en déplaçant la zone AF, qui est une étendue cible pour laquelle le réglage de la mise au point est effectué par l'unité de mise au point automatique, conformément à un mouvement du sujet dans l'image prise, qui est déterminé par l'authentification de visage comme étant la même personne que l'un quelconque des sujets, qui sont des cibles devant faire l'objet d'une mise au point pendant la prise, le sujet est suivi automatiquement dans l'image prise.

3. Système de mise au point automatique selon l'une quelconque des revendications 1 à 2, dans lequel la mémoire externe inclut une carte de données.
